# EUROPEAN PATENT APPLICATION

(11) **EP 1 179 924 A2**
(43) Date of publication of application: **13.02.2002**
(21) Application number: 01117744.1
(22) Date of filing: 30.07.2001
(51) Int. Cl.: H04L 12/56

(54) **Device for recognizing and assigning priorities to data packets for telecommunications networks**

(30) Priority: 10.08.2000 IT TV000097
(71) Applicant: Telsey S.p.A., 31055 Quinto di Treviso (IT)
(72) Inventor: Fantin, Mauro, 31100 Treviso (IT)
(74) Representative: Modiano, Guido, Dr.-Ing.

(57) **Abstract**

A device (100) for recognizing and assigning priorities to data packets for telecommunications networks, comprising switching means (20) which are adapted to divide data packets that arrive from an operator network connected thereto and to route them according to packet type, the switching means being connected to voice data processing means (27) and to a plurality of outputs (23) which allow to connect apparatuses for processing the data.

## Description

The present invention relates to a device for recognizing and assigning priorities to data packets for telecommunications networks.

It is known that the entry of new operators in the telecommunications sector is accompanied by the availability of new technologies which can provide users not only with the traditional telephony service but also with services for video broadcasting, video conferencing, Internet access and anything that can be made available by means of telecommunications networks which transmit data packets instead of analog information as occurred in the past.

As mentioned, the various packets are transmitted over the network, and on the basis of information contained in the data packet itself it is possible to send precisely the data to the users by means of unique addresses.

The packets sent to a given address are further identified according to the service that they transport; in other words, video packets are identified differently from audio packets and from data packets.

The data network entrusted with transporting and distributing the services is equipped with a plurality of devices which route the various packets so as to interconnect the various users.

Clearly, on a network of this type, in which there are no preferential connections but the network is shared by all users, it is necessary to assign priorities to services that need to be delivered in real time.

The different "coloring" of the data packets allows network equipment to identify them and give transit priority to voice and video packets over pure data packets.

In this manner it becomes possible to transmit services which cannot be subjected to interruptions or delays in order to maintain acceptable quality.

At the subscriber's location, the services must be decoded and distributed according to their nature: voice toward telephone sets, video toward television sets, and data toward personal computers.

The operator usually delivers its services to homes by means of high-capacity physical media, such as for example coaxial cables, fiber optics, wire pairs with xDSL systems, et cetera.

Usually, inside the home the services are distributed by means of a local network (also known as LAN, Local Area Network), to which various apparatuses used to utilize said services are connected.

The local network (LAN) can have a so-called bus or star configuration: in the latter mode, point-to-point connections branch out toward the apparatuses by using an appropriate concentrator also known as hub.

The local network can use, for example, the standard known by the trademark Ethernet and can have a bus configuration (by means of a solution known as Ethernet 10Base5) or a star configuration (by means of a solution known as Ethernet 10baseT).

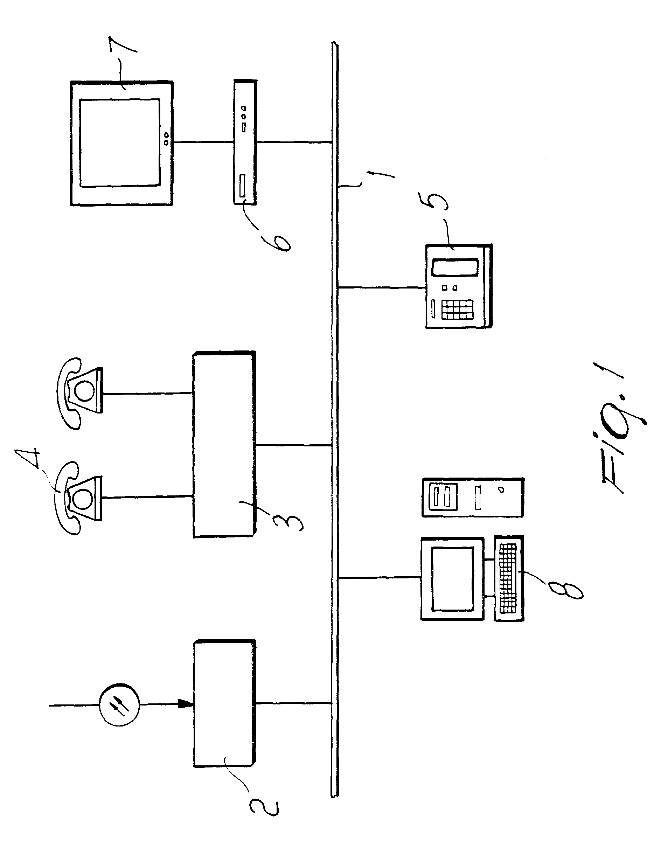

Figure 1 schematically illustrates an example of bus-type LAN network connection, in which the reference numeral 1 designates a coaxial cable to which a specific operator interface 2 is connected; the interface accepts signals which arrive from a fiber-optic network, a radio link (also referenced as LMDS, Local Multipoint Distribution System), or other forms of broadband transmission.

Inside the building to be served, the voice services are decoded by appropriately provided voice decoding means, designated by the reference numeral 3 (and also referenced as Voice Gateway), which provide in output analog or ISDN telephone lines to which standard telephone sets 4 are to be connected.

As an alternative, there are telephone sets which are capable of directly decoding voice on the network; these sets are designated by the reference numeral 5 in Figure 1 and are also known as "IP phones".

Video services are decoded by virtue of video decoding means 6 (also known as Set Top Boxes), which are interfaced with a television set 7, while the data are processed directly by a personal computer 8, for example by means of a standard Ethernet interface.

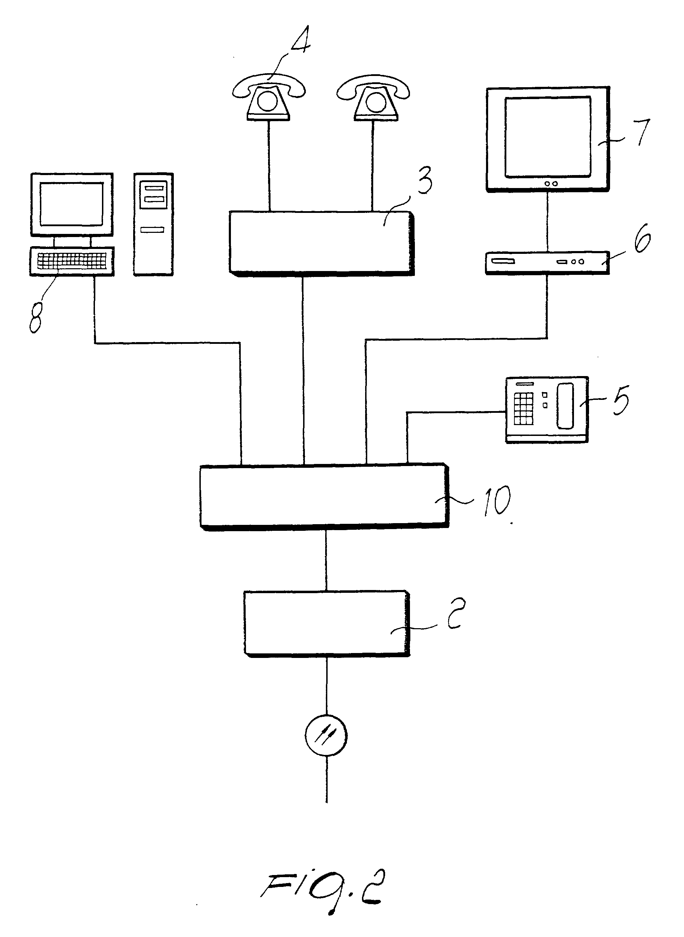

Figure 2 schematically illustrates a configuration which is substantially similar to the configuration of Figure 1 but which instead of having a bus-type connection has a hub-type connection, designated in this case by the reference numeral 10.

The other elements identified in Figure 2 and similar to the elements of Figure 1 are designated by the same reference numerals.

These simple connection and decoding methods, however, have the problem that they do not handle service priority in any way.

The aim of the present invention is to provide a device for recognizing and assigning priorities to data packets for telecommunications networks which allows to recognize packets in transit on the telecommunications network and to identify their priorities.

Within this aim, an object of the present invention is to provide a device for recognizing and assigning priorities to data packets for telecommunications networks which allows to route trusted packets to different outputs according to the physical address to be served and according to the priority of the various packets.

Another object of the present invention is to provide a device for recognizing and assigning priorities to data packets for telecommunications networks which allows to integrate priority determination and voice data packet decoding in a single integrated circuit.

Another object of the present invention is to provide a device for recognizing and assigning priorities to data packets for telecommunications networks which allows to provide data management apparatuses capable of routing the various data packets.

Another object of the present invention is to provide a device for recognizing and assigning priorities to data packets which is highly reliable and structurally simple and has competitive production costs.

This aim and these and other objects which will become better apparent hereinafter are achieved by a device for recognizing and assigning priorities to data packets for telecommunications networks, characterized in that it comprises switching means which are adapted to divide data packets that arrive from an operator network connected thereto and to route them according to packet type, said switching means being connected to voice data processing means and to a plurality of outputs which allow to connect apparatuses for processing said data.

Further characteristics and advantages of the present invention will become better apparent from the following detailed description of preferred but not exclusive embodiments of the device according to the present invention, illustrated only by way of non-limitative example in the accompanying drawings, wherein:
Figure 1 is an exemplifying block diagram of a conventional bus-type local network connection;
Figure 2 is an exemplifying block diagram of a conventional star-type local network connection;
Figure 3 is a block diagram of the architecture of the device according to the present invention;
Figure 4 is a block diagram of an example of use of the device according to the present invention shown in Figure 3;
Figure 5 is a block diagram of an example of a second manner of using the device according to the present invention, shown in Figure 3.

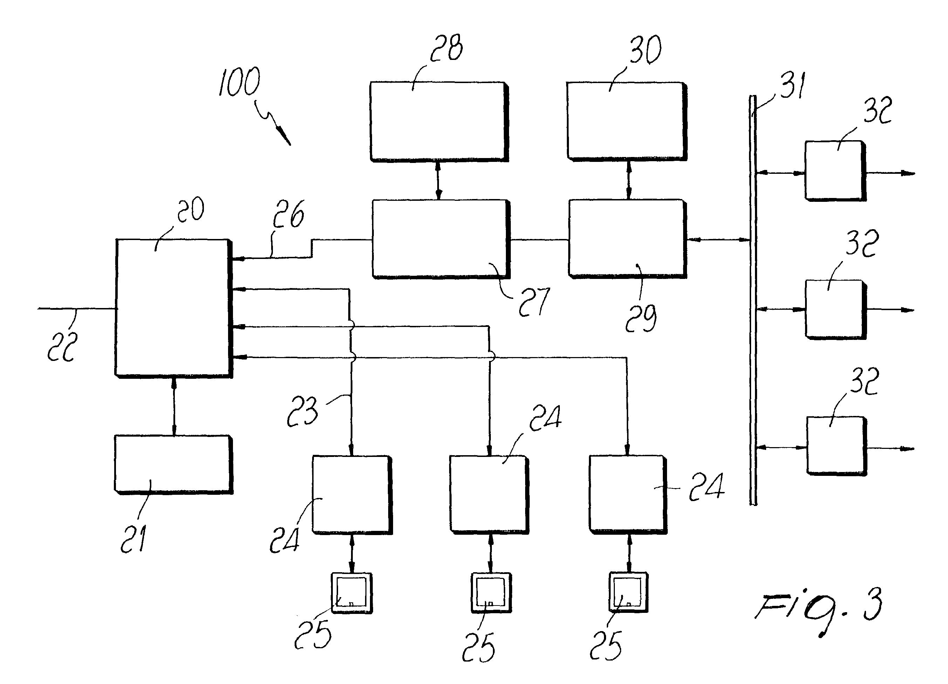

With reference to the figures, in which identical reference numerals designate identical elements, and particularly with reference to Figure 3, the device (or chip) according to the present invention is generally designated by the reference numeral 100 and comprises, in an integrated manner, a priority determination part and a voice decoding part, so that it is able to recognize the packets in transit on the network and to identify their priorities.

The chip 100 allows to route the packets to various outputs according to the physical address to be served and according to their priority; accordingly, transit to and from the network is assigned preferentially to voice packets, followed by video packets and, with low priority, by data packets.

Although it is known that chips that perform similar activities are commercially available, they are usually used in the production of professional medium- to high-cost equipment, which cannot be used in low-cost applications as the present invention seeks to achieve.

The present invention, as will become better apparent hereinafter, has an integrated-circuit architecture which combines the priority determination section with the voice decoding section, allowing low-cost applications.

In particular, the device 100 comprises, in an integrated manner, switching means 20 (such as a so-called switch) which are provided with corresponding memory means 21 and directly interface the communications network, for example Ethernet, designated by the reference numeral 22.

The switching means 20 are capable of dividing the data packets that arrive from the network of the operator and of routing them according to the type of service (voice, video, personal computer data, et cetera) to a plurality of outputs 23 which are connected to physical interfaces 24 which directly interface the communications network, designated by the reference numeral 25 in this case, to which apparatuses that use video data and for the personal computer can be connected.

Voice data are instead sent, by means of an output 26, to voice data packet processing means 27, which are provided with a corresponding memory 28.

The voice data packet processing means 27 are in turn connected to digital signal processing means 29, also equipped with a corresponding memory 30.

The digital signal processing means 29 are interfaced bidirectionally with a bus 31, which can be accessed both internally and externally and can interface hardware encoders 32 which are designed to convert the telephone signals of the telephones connected thereto from analog to digital and vice versa.

The digital signal processing means 29 process the voice data packets by means of the software encoders 32.

The device or chip has the innovation of integrating all the components adapted to create an integrated services distribution system which ensures, by virtue of priority management, maximum quality of service and very low system production costs.

In particular, the above-described device 100 is conveniently produced as a single chip which can be inserted in an appropriately provided apparatus arranged in input to the building to be served and is capable of routing the services to the various users according to defined priorities.

The data are therefore processed with the priority required to ensure maximum quality of service; in this case, voice data are sent before video data and the lowest priority is given to data exchanged with personal computers.

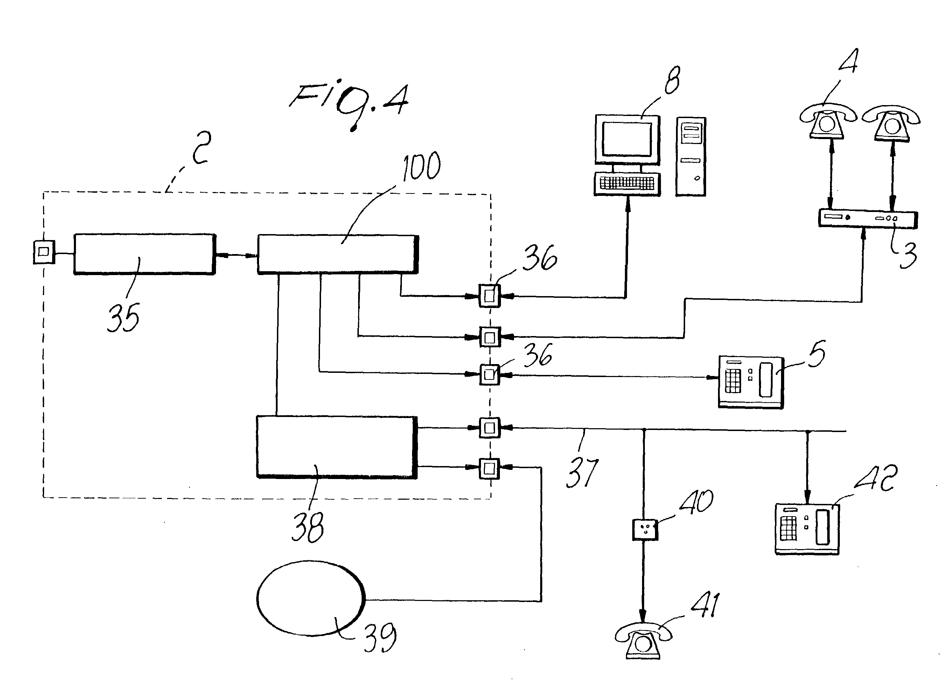

Figure 4 illustrates a possible implementation of the chip, designated by the reference numeral 100, executed according to the present invention and is conceived as a "Priority Gateway" capable of providing a certain number of Ethernet connections having a defined priority which can be programmed by means of one of the personal computers connected thereto.

In this embodiment, the apparatus (or gateway) is designated schematically by the reference numeral 2 and comprises a physical interface 35 toward the operator network, i.e., the circuits adapted to receive data from the physical medium over which the operator provides services (telephone wire pair with xDSL techniques, coaxial cable, optical fiber, radio, et cetera).

The chip 100 according to the invention provides the Ethernet interfaces, designated by the reference numeral 36, with service priority.

Personal computers 8 and analog or ISDN telephones 4 can be connected to the Ethernet interfaces 36.

Connections of the Ethernet 10/100baseT, or connections which use the physical media already present in the building, such as for example telephone wire pairs 37, the electrical system, radio links, et cetera, branch out from the point where the apparatus shown in Figure 4 and schematically designated by the reference numeral 2 is installed.

In this case, the apparatus 2 also contains an appropriately provided interface 38, which superimposes the broadband services on the services that already use the existing physical medium, such as for example the traditional telephone network 39.

Each branch has a programmable priority, so as to assign the correct priority to the device connected to that branch.

By way of example, it is possible to connect voice decoding means or voice gateways 3 which are produced by means of the above-described chip and are provided with interfaces toward standard analog or ISDN telephones 4; personal computers 8, or IP telephones 42, video decoders (set top boxes), et cetera.

In Figure 4, the reference numerals 40 in fact designate a conventional telephone socket and the reference numeral 41 designates a telephone connected thereto, while the reference numeral 42 designates an IP telephone which is similar to the telephone designated by the reference numeral 5 and is connected to the output 36 of the apparatus 2.

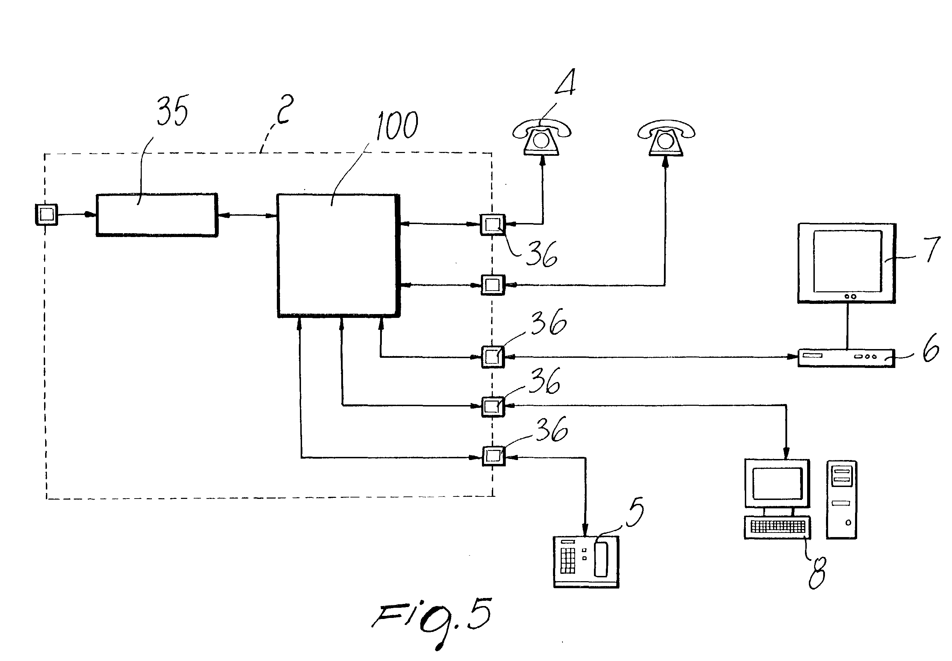

Figure 5 illustrates a second possible form of application of the chip 100 according to the present invention, conceived according to the type known as "Residential Gateway", which is capable of interfacing, by means of the apparatus or interface 2, the operator network by using various physical media, of decoding voice services internally, and of providing analog or ISDN standard telephone lines as well as lines for the connection of apparatuses which process voice data, video data and personal computer data.

To summarize, the device or chip is internally provided with: the switching means (or switches) 20, which directly interface the Ethernet network both with the 10 Mbit/s standard and with the 100 Mbit/s standard; the memory required by the switching means 20; the processor 27, capable of processing the voice packets according to standard and non-standard protocols, such as for example the ones known by the trademarks or acronyms H323, MGCP, SIP, et cetera; the memory 28 required by said processor 27; the digital signal processing means, constituted for example by a signal processor also known as DSP (Digital Signal Processor) for processing the voice packets by means of so-called software codecs (known as G711 standard and others); the DSP has a bus which can be accessed both internally and externally and is capable of interfacing the software encoders 32 (hardware codecs), a certain number of which can be integrated and are expandable externally; said hardware codecs are designed to convert the signals of the telephone connected thereto from analog to digital and vice versa.

The device or chip 100 therefore provides a specifically provided apparatus which is placed in input to the building to be served and is capable of routing the services to the various uses according to set priorities.

In practice it has been observed that the device according to the invention fully achieves the intended aim and objects, since it allows to provide, in a form in which they are integrated in a single chip, the possibility to distribute services by assigning priority and managing said priority for each service.

As shown above, the device according to the invention can for example be included in an apparatus of the type shown in Figure 4 or of the type shown in Figure 5, or can be incorporated for example in a video decoder or directly in a personal computer, according to requirements.

The device thus conceived is susceptible of numerous modifications and variations, all of which are within the scope of the same inventive concept; all the details may further be replaced with other technically equivalent elements.

The disclosures in Italian Patent Application No. TV2000A000097 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for recognizing and assigning priorities to data packets for telecommunications networks, **characterized in that** it comprises switching means which are adapted to divide data packets that arrive from an operator network connected thereto and to route them according to packet type, said switching means being connected to voice data processing means and to a plurality of outputs which allow to connect apparatuses for processing said data.

2. The device according to claim 1, **characterized in that** said switching means are provided with memory means.

3. The device according to claim 1, **characterized in that** said voice data processing means comprise voice data processor means provided with memory means and digital signal processing means provided with corresponding memory means.

4. The device according to claim 3, **characterized in that** said digital signal processing means are interfaced bidirectionally with a bus with which encoder means, adapted to convert telephone signals from analog to digital and from digital to analog, are interfaced.

5. The device according to claim 4, **characterized in that** said bus interfaced with said digital signal processing means can be accessed both internally and externally.

6. An apparatus adapted to be placed in input to a building to be served, **characterized in that** it comprises a device according to one or more of claims 1 to 5.

7. The apparatus according to claim 6, **characterized in that** it comprises an interface between a telecommunications network and said device, said device being further connected bidirectionally to an additional interface for broadband services.

8. An apparatus adapted to interface a telecommunications network, to decode voice services internally, and to provide data to peripheral units, **characterized in that** it comprises a device according to one or more of claims 1 to 5.

9. A video decoder, **characterized in that** it comprises a device according to one or more of claims 1 to 5.

10. A personal computer, **characterized in that** it comprises a device according to one or more of claims 1 to 5.
